# EUROPÄISCHE PATENTSCHRIFT

(11) **EP 3 601 813 B1**
(45) Veröffentlichungstag und Bekanntmachung des Hinweises auf die Patenterteilung: **31.07.2024**
(21) Anmeldenummer: 17713628.0
(22) Anmeldetag: 24.03.2017
(51) Int. Cl.: F16B 5/02

(54) **FIXIERSCHEIBE UND VERFAHREN ZUR ANFÄNGLICHEN FIXIERUNG EINES BEFESTIGUNGSELEMENTS UND ENTFERNEN EINER SCHUTZFOLIE**
FIXING DISC AND METHOD FOR INITIALLY FIXING A FASTENING ELEMENT AND REMOVING A PROTECTIVE FILM
RONDELLE DE FIXATION ET PROCÉDÉ POUR LA FIXATION INITIALE D'UN ÉLÉMENT DE FIXATION ET L'ENLÈVEMENT D'UN FILM DE PROTECTION

(43) Veröffentlichungstag der Anmeldung: 05.02.2020
(73) Patentinhaber: EJOT SE & Co. KG, 57319 Bad Berleburg (DE)
(72) Erfinder: HEINRICH, Kostja, 57319 Bad Berleburg (DE); HACKLER, Erhard, 57319 Bad Berleburg (DE); KNEBEL, Ulrich, 57319 Bad Berleburg (DE)
(74) Vertreter: Bardehle Pagenberg Partnerschaft mbB Patentanwälte Rechtsanwälte
(86) Internationale Anmeldenummer: PCT/EP2017/057074
(87) Internationale Veröffentlichungsnummer: WO 2018/171895

(56) Entgegenhaltungen:
- DE-U- 1 887 998
- DE-U1- 202004 000 163
- JP-A- 2017 003 036
- US-A1- 2008 175 689

## Beschreibung

Die vorliegende Erfindung betrifft eine Fixierscheibe zur anfänglichen Fixierung eines Befestigungselements in einer Öffnung eines zu befestigenden Bauteils, insbesondere einer Fassadenplatte, und die Entfernung einer Schutzfolie auf dem entsprechenden zu befestigenden Bauteil.

Fassadenplatten werden mit unterschiedlichen Hilfsmitteln an einem Untergrund oder an einer Unterkonstruktion befestigt. Es gibt Befestigungspunkte an denen die Fassadenplatte fest, das heißt genau an der jeweiligen Stelle an dem Untergrund oder der Unterkonstruktion befestigt wird und es gibt Stellen an denen die Fassadenplatte in Plattenebene gleitend und zwängungsfrei an dem Untergrund oder der Unterkonstruktion befestigt wird. Im Gegensatz zu der festen Befestigung ermöglicht die gleitende Befestigung, dass sich die Fassadenplatte relativ zu dem Befestigungspunkt bewegen kann. Hierbei handelt es sich um eine Bewegung parallel zur flächigen Erstreckung der Oberfläche der Fassadenplatte. Da eine Fassadenplatte unterschiedlichsten Temperaturen und anderen Umwelteinflüssen ausgesetzt ist, verändert sie sich relativ zu dem Untergrund oder der Unterkonstruktion. Damit die Fassadenplatten trotz derartiger Einflüsse zwängungsfrei gehalten werden, werden die Fassadenplatten zumindest teilweise gleitend befestigt.

Eine gleitende Befestigung kann dadurch erzielt werden, dass ein Durchmesser einer Öffnung in der Fassadenplatte in der ein Befestigungselement angeordnet wird, größer ist als der Durchmesser des Querschnitts des Befestigungselements. Hierdurch ergibt sich zwischen dem Befestigungselement und dem Rand der Öffnung ein Freiraum, aufgrund dessen sich die Fassadenplatte, relativ zu dem Befestigungselement bewegen kann. Damit die Fassadenplatte in alle Richtungen die gewünschte Bewegungsfreiheit hat, ist es wichtig, dass das Befestigungselement an einer vorbestimmten Position, vorzugsweise mittig in der Öffnung gesetzt wird.

Auf den bekannten Fassadenplatten sind zum Schutz der Oberfläche während des Transports und während der Montage Schutzfolien angeordnet. Diese Schutzfolien sollen möglichst lange auf den Fassadenplatten verbleiben, um Beschädigungen zu vermeiden. Nach dem Setzen eines Befestigungselements wird aber zumindest ein Teil dieser Schutzfolie zwischen dem Kopf des Befestigungselements und der Fassadenplatte eingequetscht. Wird die Schutzfolie anschließend abgezogen, so verbleiben zumeist Reste der Schutzfolie um die Befestigungspunkte auf der Fassadenplatte. Diese Reste der Schutzfolie zu entfernen erfordert einen erheblichen Zeitaufwand und birgt ein erhebliches Risiko der Beschädigung. Aus diesem Grund wird zumeist bereits vor dem Setzen des Befestigungselements ein Teil der Schutzfolie entfernt, nämlich dort wo das Befestigungselement gesetzt wird. Dies erfordert aber nicht nur zusätzlichen Zeitaufwand, sondern birgt auch das Risiko, dass die Oberfläche der Fassadenplatte in zumindest diesem Teil ungeschützt ist und beispielsweise beim Setzen des Befestigungselements beschädigt oder verkratzt wird.

Aus DE 20 2004 000 163 U1 ist eine Blindniete bekannt, die eine Trennvorrichtung aufweist, die beim Setzen die Schutzfolie einschneidet, so dass diese leichter gelöst werden kann. Aus JP2017003036A ist eine Unterlegscheibe bekannt, die eine darunterliegende Schutzfolie einschneidet, so dass diese leichter gelöst werden kann. Beide Stand der Technik Dokumente erlauben aber nicht das Einschneiden der Schutzfolie bei gleichzeitiger zwängungsfreier Befestigung.

Ausgehend hiervon stellt sich die Aufgabe ein Hilfsmittel bereitzustellen, mit dem die Montage von Bauteilen, insbesondere Fassadenplatten in einer zwängungsfreien Art und Weise, an einem Untergrund oder eine Unterkonstruktion vereinfacht werden kann.

Erfindungsgemäß wird die Aufgabe durch die Fixierscheibe, das System und Verfahren der unabhängigen Ansprüche gelöst. Bevorzugte Ausführungsformen ergeben sich aus den abhängigen Ansprüchen und aus der nachfolgenden Beschreibung.

Die Aufgabe wird erfindungsgemäß durch eine Fixierscheibe zur anfänglichen Fixierung eines Befestigungselements in einer Öffnung eines zu befestigenden Bauteils, insbesondere einer Fassadenplatte, beim Setzen des Befestigungselements und zum Einschneiden und / oder Entfernen eines definierten Bereichs einer Schutzfolie auf dem zu befestigenden Bauteil beim Setzen des Befestigungselements gelöst. Die Fixierscheibe dient dabei also dazu das Befestigungselement anfänglich zu Zentrieren, nämlich vor oder während dem Setzen des Befestigungselements. Die Fixierscheibe dient des Weiteren dazu eine unterhalb der Fixierscheibe liegende Schutzfolie auf dem durch das Befestigungselement zu befestigenden Bauteils zumindest zu einem Teil zu entfernen und / oder einzuschneiden, so dass nach dem Befestigen die restliche Schutzfolie einfach abgezogen werden kann, ohne dass Reste der Schutzfolie an den Befestigungspunkten einzeln aufwendig entfernt werden müssen. Dabei sorgt die

Fixierscheibe auch dafür, dass kein direkter Kontakt zwischen dem Befestigungselementkopf und dem zu befestigenden Bauteil auftritt, was ansonsten zu Beschädigungen der Lackierung oder deren Oberflächenveredelung führen könnte. Die erfindungsgemäße Fixierscheibe weist dabei ein Fixiermittel auf, wobei das Fixiermittel das Befestigungselement in einer vorbestimmten Position relativ zu der Öffnung beim Setzen des Befestigungselements hält. Im Rahmen der vorliegenden Erfindung bezeichnet ein Fixiermittel ein Mittel, das den Monteur beim Setzen des Befestigungselements dabei unterstützt, das Befestigungselement an einer vorbestimmten Position relativ zu der Öffnung zu setzen. Bevorzugt unterstützt es den Monteur dabei das Befestigungselement mittig in die Öffnung zu setzen, d.h. derart zu setzen, dass vom Befestigungselement bis zum Rand der Öffnung der gleiche Abstand vorherrscht. Das Fixiermittel hält das Befestigungselement zumindest beim anfänglichen Setzen in der vorbestimmten Position. Das Fixiermittel kann beispielsweise im Wesentlichen mittig von der Fixierscheibe angeordnet sein, und derart ausgestaltet sein, dass es die Spitze des Befestigungselements zumindest am Anfang des Setzens im Wesentlichen an der gleichen Position beziehungsweise in dem gleichen Bereich hält. Das Fixiermittel selbst kann beispielsweise eine zentrale Öffnung in der Fixierscheibe sein sowie ein Mittel sein, welches die Fixierscheibe in Bezug auf die Öffnung im zu befestigenden Bauteil an einer bestimmten Position hält. Beispielsweise kann das Fixiermittel ein Teil der Fixierscheibe sein, welches in Bezug auf den Rest der Fixierscheibe höhenversetzt ist. Beispielsweise kann zwischen der Fixierscheibe und dem Fixiermittel ein hülsenartiger Fortsatz ausgebildet sein. Dieser hülsenartige Fortsatz kann dabei einen Durchmesser haben, der im Wesentlichen dem Durchmesser der Öffnung in dem zu befestigenden Bauteil entspricht, so dass durch den hülsenartigen Fortsatz eine Festlegung der Fixierscheibe relativ zur Öffnung möglich ist. Das Fixiermittel kann dann derart ausgestaltet sein, dass dieses das Befestigungselement zumindest anfänglich zentriert in dem hülsenartigen Fortsatz hält und führt. Beispielsweise kann in diesem Fall das Fixiermittel durch sich nach innen erstreckende Rippen an der Innenwand des hülsenartigen Fortsatzes gebildet werden. Alternativ oder zusätzlich kann das Fixiermittel in diesem Fall auch durch den Boden des hülsenartigen Fortsatzes gebildet werden, in dem sich ein Loch oder eine mittige Öffnung befindet, welche zumindest anfänglich eine Zentrierung des Befestigungselements erlaubt. Das Fixiermittel kann das Befestigungselement beispielsweise nur anfänglich zentrieren, bis das Befestigungselement zumindest einen gewissen Halt im Untergrund oder in der Unterkonstruktion hat. Ist ein gewisser Halt gegeben, ist eine weitere Zentrierung nicht mehr nötig, d.h. ab diesem Zeitpunkt braucht das Fixiermittel keine Haltewirkung mehr auszuüben. Dementsprechend kann das Fixiermittel beim Setzen des Befestigungselements auch gänzlich oder teilweise zerstört werden.

Die erfindungsgemäße Fixierscheibe weist des Weiteren zumindest ein Verbindungsmittel zum zumindest zeitweisen Herstellen einer Verbindung zwischen dem Befestigungselement und der Fixierscheibe auf, sowie zumindest ein Schneid- und / oder Reibmittel an der dem zu befestigenden Bauteil zugewandten Seite der Fixierscheibe. Das Verbindungsmittel dient dabei dazu, eine formschlüssige Verbindung zwischen dem Befestigungselement und der Fixierscheibe zu schaffen, so dass eine Drehbewegung des Befestigungselements auch auf die Fixierscheibe übertragen wird. Durch die Drehung der Fixierscheibe wird das Schneid- und / oder Reibmittel über dem zu befestigenden Bauteil und insbesondere über die Schutzfolie bewegt. Hierdurch wird zumindest ein Teil der Schutzfolie entfernt. Entfernt in diesem Fall bedeutet, dass entweder ein Teil der Schutzfolie vollständig entfernt wird, oder auch nur teilweise entfernt wird, wenn beispielsweise ein Reibmittel eingesetzt wird. Entfernen in diesem Zusammenhang kann aber auch bedeuten, dass die Schutzfolie eingeschnitten wird, beispielsweise wenn ein Schneidmittel eingesetzt wird. In diesem Fall ist die Schutzfolie dort entfernt, wo der Schnitt oder die Schnitte getätigt werden. Anschließend kann der Rest der Schutzfolie in einem weiteren Arbeitsschritt einfach entfernt werden. Die Schutzfolie wird dabei durch die Fixierscheibe zumindest in einem derartigen Bereich entfernt, der der Ausdehnung der Fixierscheibe im Wesentlichen entspricht bzw. der Überdeckung der Öffnung durch die Fixierscheibe im Wesentlichen entspricht. D.h. der Rest der Schutzfolie kann einfach entfernt werden, weil diese nicht mehr substantiell zwischen Fixierscheibe bzw. Befestigungselementkopf und zu befestigendem Bauteil eingequetscht ist.

Die erfindungsgemäße Fixierscheibe erlaubt es dementsprechend in einem Arbeitsgang ein Bauteil mit einem in einer Öffnung zentrierten Befestigungselement zu befestigen, wobei gleichzeitig eine eventuell auf dem Bauteil angebrachte Schutzfolie zumindest derart von einer Fixierscheibe entfernt wird, dass der Rest der Schutzfolie ohne große Mühe abgezogen werden kann und insbesondere derart abgezogen werden kann, dass keine Rückstände der Schutzfolie um die Öffnung in dem zu befestigenden Bauteil verbleiben.

In einer bevorzugten Ausführungsform der Fixierscheibe weist diese einen Durchmesser auf, der größer ist als der Durchmesser der Öffnung in dem zu befestigenden Bauteil. D.h. die Fixierscheibe liegt zumindest mit einem Teil auf dem zu befestigenden Bauteil auf. Bevorzugt ist das Schneid- und / oder Reibmittel derart ausgestaltet, dass dieses in der Lage ist eine Schutzfolie zumindest in dem überdeckten Bereich zu entfernen.

In einer weiteren bevorzugten Ausführungsform der Fixierscheibe wird das Fixiermittel durch eine zentrale Öffnung in der Fixierscheibe und zumindest einem Haltemittel angeordnet in der zentralen Öffnung gebildet. Beispielsweise erstrecken sich in die zentrale Öffnung hinein Rippen oder andere Mittel, die ausgestaltet sind das Befestigungselement zentriert in der zentralen Öffnung zu halten. Von der zentralen Öffnung weg kann sich auch beispielsweise ein kegelstumpfartiger Fortsatz erstrecken, wobei dessen kleinerer Durchmesser dem Durchmesser des Querschnittes des Befestigungselements im Wesentlichen entsprechen kann und das entsprechende Ende des kegelstumpfartigen Fortsatzes ist dann geeignet das Befestigungselement zentriert zu halten. Es ist aber auch möglich, dass sich von der zentralen Öffnung ein hülsenartiger Fortsatz erstreckt, der einen größeren Durchmesser hat als der Querschnitt des Befestigungselements. In dem hülsenartigen Fortsatz können Haltemittel in Form von sich zum Zentrum der Hülse erstreckenden Rippen angeordnet sein, die das Befestigungselement zentriert halten. Alternativ oder zusätzlich kann der hülsenartige Fortsatz an der der Fixierscheibe abgewandten Seite einen Boden also einen Verschluss aufweisen, der eine mittig angeordnete Öffnung aufweist. Der Durchmesser der Öffnung ist dabei angepasst im Wesentlichen dem Durchmesser dem Querschnitts der Spitze bzw. der Bohrspitze oder dem Querschnitt des Befestigungselements zu entsprechen, so dass dieses zentriert gehalten wird.

Das Verbindungsmittel ist derart ausgestaltet, dass dieses eine formschlüssige Verbindung zwischen der Fixierscheibe und dem Befestigungselement herstellt, so dass die Fixierscheibe eine gleichgerichtete Bewegung mit dem Befestigungselement ausführt. Die Verbindung ist dabei lösbar, d.h. die Verbindung kann reversibel sein. Es ist dem Fachmann aber bewusst, dass wenn die Verbindung gelöst wird auch das Befestigungselement gelöst wird und dementsprechend dieses keine oder nur noch eine verminderte Befestigungswirkung entfaltet. Die Verbindung zwischen der Fixierscheibe und dem Befestigungselement bewirkt, dass wenn das Befestigungselement gedreht wird sich auch die Fixierscheibe dreht. Eine formschlüssige Verbindung kann dabei beispielsweise derart hergestellt werden, dass an der Fixierscheibe und dem Befestigungselement bzw. dem Befestigungselementkopf zumindest zwei komplementäre Verbindungsmittel ausgebildet sind, beispielsweise sich komplementär entsprechende Vorsprünge und Ausnehmungen. Dabei kann entweder nur die Fixierscheibe Ausnehmungen aufweisen und das Befestigungselement entsprechende von diesen Ausnehmungen aufnehmbare Vorsprünge oder umgekehrt. Es ist aber auch denkbar, dass die Fixierscheibe sowie das Befestigungselement jeweils Ausnehmungen und Vorsprünge aufweisen, die derart zusammenwirken können, dass eine formschlüssige Verbindung geschaffen wird. Auch wenn hier mehrere Vorsprünge und Ausnehmungen genannt sind, so ist dem Fachmann bewusst, dass es auch nur ein Vorsprung und eine Ausnehmung sein kann aber auch, dass sich die Anzahl der Vorsprünge und Ausnehmungen nicht entsprechen muss. Eine andere Art der lösbaren Verbindung - hier nur als Beispiel genannt und nicht beansprucht -ist eine kraftschlüssige Verbindung also eine reibschlüssige Verbindung. D.h. zwischen der Fixierscheibe und dem Befestigungselement kann eine Haftreibung aufgebracht, die derart groß ist, dass die Fixierscheibe eine mit dem Befestigungselement gleichgerichtete Bewegung ausführt. Hierzu kann die Fixierscheibe an der dem zu befestigenden Bauteil abgewandte Seite zumindest teilweise derart ausgestaltet sein, dass diese Seite bzw. die Teile einen Reibungskoeffizienten aufweisen, der derart hoch ist, dass genügend Haftreibung erzeugt werden kann, um die Fixierscheibe zu drehen. Dabei kann beispielsweise diese Seite der Fixierscheide bzw. diese Teile der Fixierscheibe einen höheren Reibungskoeffizienten aufweisen als der Rest der Fixierscheibe. Hierzu kann beispielsweise das Material der Fixierscheibe in diesen Teilen aufgeraut sein. Alternativ oder zusätzlich kann die Fixierscheibe in diesen Teilen mit einem klebrigen Material beschichtet sein.

In einer bevorzugten Ausführungsform ist die erfindungsgemäße Fixierscheibe aus Kunststoff hergestellt und monolithisch als ein Spritzgussteil aufgebaut.

Die Aufgabe der vorliegenden Erfindung wird auch gelöst durch ein erfindungsgemäßes Befestigungselement zur Befestigung von Bauteilen, insbesondere Fassadenplatten, wobei das Befestigungselement aufweist einen ersten Endbereich zur Verankerung des Befestigungselements in einem Untergrund oder in einer Unterkonstruktion. Dieser Endbereich kann auch als Verankerungsbereich bezeichnet werden und kann ein Gewinde aufweisen, welches entweder direkt oder indirekt eine Verankerung des Befestigungselements im Untergrund oder in der Unterkonstruktion bewirken kann.

Bei einer direkten Verankerung hat das Gewinde des Befestigungselements direkten Kontakt mit dem Untergrund oder der Unterkonstruktion, ist also direkt in diese hineingetrieben und entfaltet hierdurch die Verankerungswirkung. Bei der indirekten Verankerung hat das Gewinde keinen direkten Kontakt mit dem Untergrund oder der Unterkonstruktion, sondern bewirkt beispielsweise eine Aufspreizung eines im Untergrund oder in der Unterkonstruktion eingebrachten Dübels. Die Verankerungswirkung wird in diesem Fall durch die entsprechende Verspreizung gewährleistet.

Das erfindungsgemäße Befestigungselement weist des Weiteren einen zweiten Endbereich auf an dem ein Befestigungselementkopf angeordnet ist. Der Befestigungselementkopf hat im Vergleich zu dem Durchmesser des Querschnitts des ersten Endbereichs einen größeren Durchmesser. Der Befestigungselementkopf weist des Weiteren an der dem ersten Endbereich zugewandten Seite zumindest ein Verbindungsmittel auf zum Herstellen einer Verbindung zwischen dem Befestigungselementkopf und einer Fixierscheibe. Hierzu ist das Verbindungsmittel derart ausgestaltet, dass es eine formschlüssige Verbindung zwischen dem Befestigungselementkopf und der Fixierscheibe herstellt. Hierzu kann der Befestigungselementkopf Vorsprünge und / oder Ausnehmungen aufweisen, die das Verbindungsmittel bilden und die mit komplementär ausgestalteten Ausnehmungen und / oder Vorsprüngen an der Fixierscheibe zusammenwirken können, um eine formschlüssige Verbindung herzustellen. Die Verbindung ist dabei lösbar, d.h. die Verbindung kann reversibel sein. Auch wenn hier mehrere Vorsprünge und Ausnehmungen genannt sind, so ist dem Fachmann bewusst, dass es auch nur ein Vorsprung und eine Ausnehmung sein kann aber auch, dass sich die Anzahl der Vorsprünge und Ausnehmungen nicht entsprechen muss. Es ist auch - hier nur als Beispiel genannt und nicht beansprucht - denkbar, dass der Befestigungselementkopf und die Fixierscheibe eine kraftschlüssige also reibschlüssige Verbindung eingehen. Hierzu kann der Befestigungselementkopf an der dem ersten Endbereich zugewandten Seite derart ausgestaltet sein, dass diese Seite zumindest teilweise einen Reibungskoeffizienten aufweist, der derart hoch ist, dass genügend Haftreibung erzeugt werden kann, um die Fixierscheibe zu drehen. Dabei kann beispielsweise diese Seite zumindest teilweise einen höheren Reibungskoeffizienten aufweisen als der Rest des Befestigungselements zur Herstellung einer kraftschlüssigen Verbindung mit der Fixierscheibe. Mit der Verbindung zwischen dem Befestigungselement und der Fixierscheibe kann eine auf das Befestigungselement aufgebrachte Drehbewegung auch auf die Fixierscheibe übertragen werden.

In einer bevorzugten Ausführungsform des erfindungsgemäßen Befestigungselements weist dieses am Befestigungselementkopf eine Aufnahme für ein Setzwerkzeug auf, so dass Drehmoment von dem Setzwerkzeug auf das Befestigungselement aufgebracht werden kann und das Befestigungselement gesetzt werden kann. Diese Aufnahme kann beispielsweise innensechskantförmig, torxförmig, oder anderweitig ausgestaltet sein.

Die oben genannte Aufgabe wird auch gelöst durch ein System bestehend aus zumindest einer der erfindungsgemäßen Fixierschreibe, zumindest einem erfindungsgemäßen Befestigungselement und einer Fassadenplatte mit einer darauf angeordneten Schutzfolie. Dabei ist dem Fachmann bewusst, dass das System auch den Zustand umfasst, wenn die Schutzfolie bereits abgezogen ist, d.h. die vormals die Schutzfolie aufweisende Fassadenplatte nach Abzug der Schutzfolie keine Schutzfolie mehr aufweist oder nur noch die Reste der Schutzfolie aufweist, die unterhalb der Fixierscheiben verbleiben.

Die oben genannte Aufgabe wird auch gelöst durch ein Verfahren zum Einschneiden und / oder Entfernen eines definierten Bereichs einer Schutzfolie auf einem zu befestigenden Bauteil, insbesondere einer Fassadenplatte, beim Setzen eines Befestigungselements in eine Öffnung in dem zu befestigenden Bauteil. Das Verfahren weist dabei auf Anordnen einer Fixierscheibe zumindest teilweise in die Öffnung in dem zu befestigenden Bauteil und Anordnen des Befestigungselements im Bereich eines Fixiermittels der Fixierscheibe. Des Weiteren weist das Verfahren auf Setzen des Befestigungselements durch Drehen des Befestigungselements, wobei während dem Setzen des Befestigungselements zumindest zeitweise eine formschlüssige Verbindung zwischen dem Befestigungselement und der Fixierscheibe hergestellt wird, so dass die Drehung des Befestigungselements auf die Fixierscheibe übertragen wird und die Fixierscheibe sich dreht. Durch die Drehung wird die Schutzfolie auf dem zu befestigenden Bauteil durch zumindest ein Schneid- und / oder Reibmittel an der dem zu befestigenden Bauteil zugewandten Seite der sich drehenden Fixierscheibe eingeschnitten und / oder entfernt.

In einer bevorzugten Ausführungsform weist das Verfahren weiter auf das Entfernen der restlichen Schutzfolie um den definierten Bereich herum, der durch die Fixierscheibe entfernt wurde.

Die Erfindung wird nachfolgend anhand von Ausführungsbeispielen mit den beigefügten Zeichnungen näher erläutert. Aus dem beschriebenen Ausführungsbeispielen ergeben sich weitere Einzelheiten, Merkmale und Vorteile des Gegenstands der Erfindung. Es zeigen:
- Fig. 1: eine perspektivische Ansicht eines Ausführungsbeispiels einer erfindungsgemäßen Fixierscheibe mit einem erfindungsgemäßen Befestigungselement;
- Fig. 2a-d: perspektivische Unteransichten von verschiedenen Ausführungsbeispielen der erfindungsgemäßen Fixierscheibe;
- Fig. 3a-d: perspektivische Draufsichten von verschiedenen Ausführungsbeispielen der erfindungsgemäßen Fixierscheibe;
- Fig. 4a-d: perspektivische Unteransichten von verschiedenen Ausführungsbeispielen des erfindungsgemäßen Befestigungselements; und
- Fig. 5: eine perspektivische Ansicht einer beispielhaften Fassadenplatte mit darauf angeordneter Schutzfolie und ein Ausführungsbeispiel einer erfindungsgemäßen Fixierscheibe mit einem erfindungsgemäßen Befestigungselement.

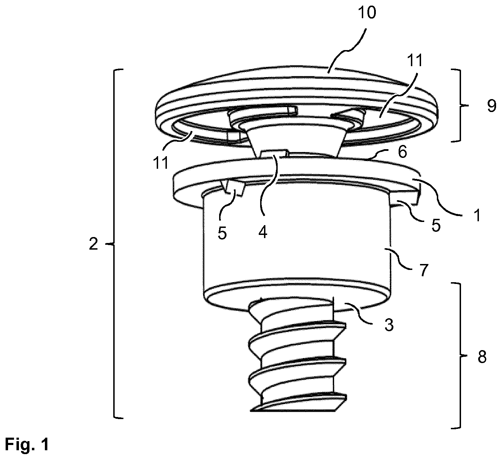

Figur 1 zeigt eine perspektivische Ansicht eines Ausführungsbeispiels einer erfindungsgemäßen Fixierscheibe 1 mit einem erfindungsgemäßen Befestigungselement 2.

Die Fixierscheibe 1 ist in dem hier gezeigten Ausführungsbeispiel als Scheibe ausgelegt, die eine zentrale Öffnung 6 aufweist, durch die sich das Befestigungselement 2 erstreckt. Es kann auch gesagt werden, dass die Fixierscheibe 1 ringförmig ist. In dem hier gezeigten Ausführungsbeispiel erstreckt sich von der zentralen Öffnung 6 weg ein hülsenartiger Fortsatz 7, der zumindest einen Teil des Befestigungselements 2 umgibt. Der hülsenartige Fortsatz 7 hat dabei bevorzugt einen Durchmesser, der größer ist als der Querschnitt des Befestigungselements 2, so dass der hülsenartige Fortsatz 7 nicht von dem Befestigungselement 2 kontaktiert wird. Der Durchmesser des hülsenartigen Fortsatzes 7 kann aber derart angepasst sein, dass dieser im Wesentlichen einem Durchmesser einer Öffnung oder einem Loch in einem zu befestigenden Bauteil, insbesondere einer Fassadenplatte, entspricht. Die Fixierscheibe 1 kann dabei einen Durchmesser aufweisen, der größer ist als die Öffnung. D.h. der hülsenartige Fortsatz 7 kann in die Öffnung eingebracht werden, wohingegen die Fixierscheibe 1 auf dem zu befestigenden Bauteil aufliegt. An dem der Fixierscheibe 1 gegenüberliegenden Ende des hülsenartigen Fortsatzes 7 ist ein Fixiermittel angeordnet, welches dazu ausgelegt ist, das Befestigungselement 2 mittig in der zentralen Öffnung 6 der Fixierscheibe 1 zu halten und gegebenenfalls zu führen. D.h. das Fixiermittel sorgt dafür, dass das Befestigungselement 2 einen definierten Abstand von dem hülsenartigen Fortsatz 7 hat und dementsprechend einen definierten Abstand von dem Rand der Öffnung in dem zu befestigenden Bauteil hat, so dass eine gleitende Befestigung ermöglich wird. In dem hier gezeigten Ausführungsbeispiel ist das Fixiermittel als Boden des hülsenartigen Fortsatzes 7 ausgestaltet und weist eine mittige Öffnung auf, die dem Querschnitt des Befestigungselements 2 im Wesentlichen entsprechen kann. Der Boden mit der mittigen Öffnung kann auch als Haltemittel 3 bezeichnet werden, weil hierdurch das Befestigungselement 2 gehalten wird.

Das Befestigungselement 2 weist in dem hier gezeigten Ausführungsbeispiel einen ersten Endbereich 8 auf, der zur Verankerung des Befestigungselements 2 in einem Untergrund oder in einer Unterkonstruktion dient. In dem hier gezeigten Ausführungsbeispiel weist das Befestigungselement 2 an diesem ersten Endbereich 8 ein Gewinde auf. Mit diesem Gewinde kann das Befestigungselement 2 entweder direkt im Untergrund oder in der Unterkonstruktion verankert werden, oder es kann mit Hilfe eines Dübels im Untergrund oder in der Unterkonstruktion verankert werden.

Das Befestigungselement 2 weist in dem hier gezeigten Ausführungsbeispiel einen zweiten Endbereich 9 auf, der einen Befestigungselementkopf 10 aufweist an dem der Durchmesser des Querschnitts des Befestigungselements 2 sich vergrößert und im Wesentlichen dem Durchmesser der Fixierscheibe 1 entspricht.

Da in dem hier gezeigten Ausführungsbeispiel die Fixierscheibe 1 einen größeren Durchmesser als der hülsenartige Fortsatz 7 hat, wird die Fixierscheibe 1 auf dem Rand einer Öffnung des zu befestigenden Bauteils aufliegen, wenn der hülsenartige Fortsatz 7 in die Öffnung eingeführt wird. An der dem zu besteigenden Bauteil zugewandten Seite weist die Fixierscheibe 1 in dem hier gezeigten Ausführungsbeispiel vorstehende Zacken 5 auf, die sich in Richtung des zu befestigenden Bauteils erstrecken. Diese vorstehenden Zacken 5 erstrecken sich in dem hier gezeigten Ausführungsbeispiel von dem hülsenartigen Fortsatz 7 bis zum Rand der Fixierscheibe 1.

Die in dem hier gezeigten Ausführungsbeispiel gezeigten Zacken 5 dienen als Schneid-und / oder Reibmittel und sind dazu angepasst eine auf dem zu befestigenden Bauteil befindliche Schutzfolie in einem definierten Bereich um die Öffnung herum zu entfernen. Das Entfernen geschieht dadurch, dass die Fixierscheibe 1 beim Setzen des Befestigungselement 2 gedreht wird. Hierzu weist die Fixierscheibe 1 an der dem zu befestigenden Bauteil abgewandten Seite in dem hier gezeigten Ausführungsbeispiel einen Vorsprung 4 auf, der in eine entsprechende Ausnehmung 11 im Befestigungselementkopf 10 greifen kann, wenn das Befestigungselement 2 drehend gesetzt wird und die Fixierscheibe 1 kontaktiert. Der Vorsprung 4 kann auch als Verbindungsmittel bezeichnet werden, welches mit der Ausnehmung 11 am Befestigungselementkopf 10 eine formschlüssige Verbindung herstellt. Die Ausgestaltung des Verbindungsmittels 4 kann dabei beliebig sein, es muss nur derart ausgestaltet sein, dass eine zumindest zeitweise formschlüssige Verbindung zwischen der Fixierscheibe 1 und dem Befestigungselement 2 hergestellt wird, so dass eine auf das Befestigungselement 2 ausgeübte Drehbewegung sich auf die Fixierscheibe 1 überträgt und das Schneid- und / oder Reibmittel 5 der Fixierscheibe 1 eine genügende Anzahl von Drehungen ausführt, um die sich zwischen Fixierscheibe 1 und zu befestigenden Bauteil befindliche Schutzfolie zu entfernen bzw. einzuschneiden. Dem Fachmann ist bewusst, dass die Fixierscheibe 1 auch bereits dann in Drehung versetzt werden kann, wenn der erste Endbereich 8 des Befestigungselements 2 die Öffnung im Fortsatz 7 berührt. Hierbei kann es zu einer temporären Klemmung bzw. Reibung zwischen dem ersten Endbereich 8 des Befestigungselements 2 und der Öffnung kommen, so dass eine derart große Kraft auf die Fixierscheibe 1 ausgeübt wird, so dass diese gedreht wird.

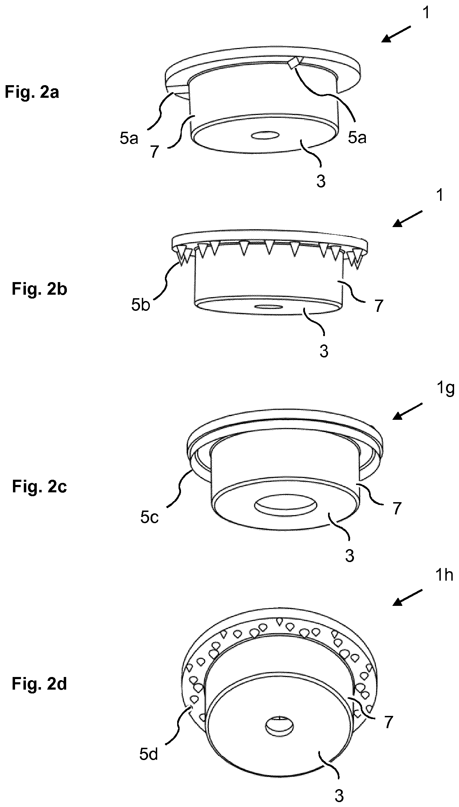

Figur 2 zeigt perspektivische Unteransichten von verschiedenen Ausführungsbeispielen der erfindungsgemäßen Fixierscheibe 1 mit verschiedenen Ausführungen der Schneid-und / oder Reibmittel 5, die dazu verwendet werden können, die Schutzfolie zu entfernen bzw. einzuschneiden. So zeigt Figur 2a beispielsweise die Ausgestaltung der Schneid- und / oder Reibmittel 5 als sich in Richtung des zu befestigenden Bauteils erstreckende längliche Zacken 5a, die sich von der Fixierscheibe 1 weg erstreckend verjüngen und in eine Reibkante übergehen. Die Reibkante der jeweiligen Zacken 5a werden dabei bei der Drehung der Fixierscheibe 1 über das zu befestigende Bauteil bewegt und reiben die Schutzfolie weg. Die Figur 2b zeigt beispielsweise die Ausgestaltung der Schneid- und / oder Reibmittel 5 als sich in Richtung des zu befestigenden Bauteils erstreckende Dornen 5b. Diese Dornen 5b können beispielsweise am äußeren Rand der Fixierscheibe 1 angeordnet sein und können bei Drehung der Fixierscheibe 1 einen definierten Ringbereich der Schutzfolie entfernen. Es ist auch möglich, dass die Dornen 5b unregelmäßig auf der dem zu befestigenden Bauteil zugewandten Seite der Fixierscheibe 1 angeordnet sind, so dass die Dornen 5b quasi die Schutzfolie unterhalb der Fixierscheibe 1 wegreißen, wenn die Fixierscheibe 1 beim Setzen des Befestigungselements 2 gedreht wird. Die Figur 2c zeigt beispielsweise die Ausgestaltung der Schneid- und / oder Reibmittel 5 als sich in Richtung des zu befestigenden Bauteils erstreckende umlaufende Schneidkante 5c. Diese umlaufende Schneidkante 5c ist in der Lage bei Drehung der Fixierscheibe 1 die Schutzfolie ringförmig einzuschneiden, so dass der Bereich der Schutzfolie, die unterhalb der Fixierscheibe 1 liegt getrennt wird von der restlichen Schutzfolie. Auch wenn die hier gezeigte umlaufende Schneidkante 5c als durchgehend gezeigt ist, so wird vom Fachmann verstanden werden, dass ein Einschneiden auch durch eine unterbrochene Schneidkante 5c hervorgerufen werden kann. Die Figur 2d zeigt beispielsweise die Ausgestaltung der Schneid- und / oder Reibmittel 5 als Körnung 5d, die auf der Seite der Fixierscheibe 1 angeordnet ist, die dem zu befestigenden Bauteil zugewandt ist. Die Körnung 5d dient dazu, die Schutzfolie wegzuschleifen, wenn die Fixierscheibe 1 gedreht wird beim Setzen des Befestigungselements 2. Es ist dem Fachmann bewusst, dass auch wenn hier explizite Ausführungsbeispiele der Schneid- und / oder Reibmittel 5 gezeigt sind, diese auch anders ausgestaltet sein können und die entsprechenden Ausführungsbeispiele hier nur exemplarisch gezeigt sind. Unter den Begriff Schneid- und / oder Reibmittel 5 soll dementsprechend alles fallen, was geeignet ist zumindest einen Teil der Schutzfolie zu entfernen, sei es durch Reiben, Schleifen, Fräsen oder Schneiden.

Damit das Schneid- und / oder Reibmittel 5 zumindest einen Teil der Schutzfolie entfernen kann, muss die Fixierscheibe 1 eine mit dem Befestigungselement 2 gleichgerichtete Drehbewegung ausführen. Hierzu wird das Befestigungselement 2 zumindest zweitweise mit der Fixierscheibe 1 über einen Formschluss verbunden.

Bei einem Formschluss ist beispielsweise zumindest ein Verbindungsmittel 4 an oder auf der Fixierscheibe 1 derart ausgestaltet, dass es eine komplementäre Formgebung zu einem an dem Befestigungselementkopf 10 befindlichen Verbindungsmittel 11 hat. Werden die beiden Verbindungsmittel 4 und 11 zueinander bewegt, so kann das eine Verbindungsmittel 4 oder 11 das andere Verbindungsmittel 11 oder 4 aufnehmen, so dass sich ein Formschluss ergibt. Über diesen Formschluss kann das auf das Befestigungselement 2 von einem Setzwerkzeug ausgeübte Drehmoment auf die Fixierscheibe 1 übertragen werden, so dass sich die Fixierscheibe 1 ebenfalls dreht. Es ist auch denkbar, dass die Formgebung der Fixierscheibe 1 selbst als Verbindungsmittel 4 dient. D.h. die Formgebung der Fixierscheibe 1 ist komplementär zu einer entsprechenden Ausnehmung am Befestigungselementkopf 10, so dass die Fixierscheibe 1 in dieser Ausnehmung aufgenommen werden kann und so das Drehmoment auf die Fixierscheibe übertragen werden kann. Eine umgekehrte Ausgestaltung ist ebenfalls möglich. Zusätzlich zum Formschluss ist auch ein Kraftschluss zwischen dem Befestigungselementkopf 10 und der Fixierscheibe 1 möglich. D.h. zwischen den beiden Bauteilen wird eine Haftreibung aufgebaut, so dass auch hierüber ein auf das Befestigungselement 2 ausgeübtes Drehmoment auf die Fixierscheibe 1 übertragen werden kann. Hierzu weist beispielsweise die Fixierscheibe 1 auf zumindest einem Teil der dem Befestigungselementkopf 10 zugewandten Seite einen höheren Reibungskoeffizienten auf als am Rest der Fixierscheibe 1.

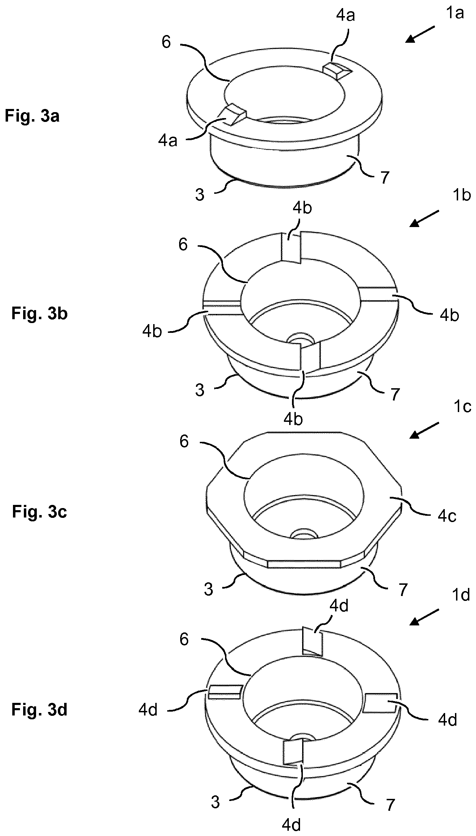

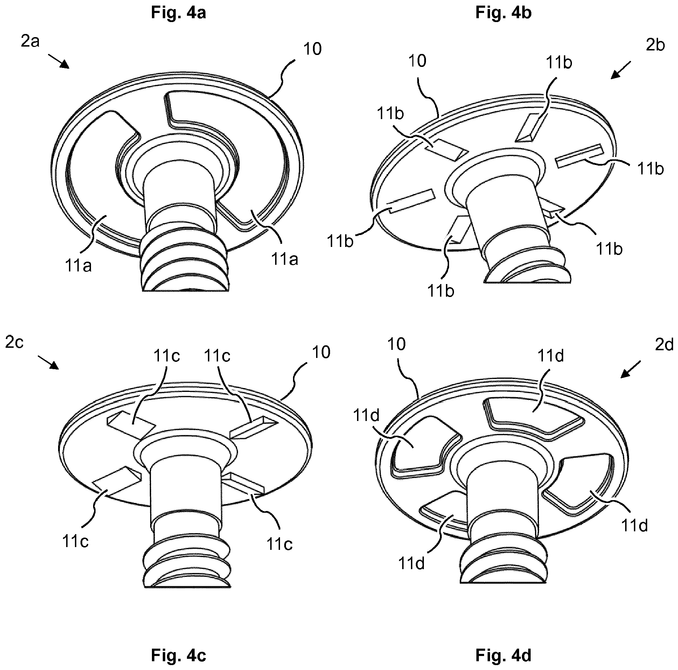

Entsprechende Verbindungsmittel 4 und 11 sind in den Figuren 3 und 4 gezeigt. Figur 3 zeigt dabei perspektivische Draufsichten von verschiedenen Ausführungsbeispielen der erfindungsgemäßen Fixierscheibe 1 mit entsprechenden beispielhaften Verbindungsmitteln 4 auf der dem zu befestigenden Bauteil abgewandten Seite der Fixierscheibe 1 und Figur 4 zeigt perspektivische Unteransichten von verschiedenen Ausführungsbeispielen des erfindungsgemäßen Befestigungselements 2 mit entsprechenden beispielhaften Verbindungsmitteln 11.

Figur 3a zeigt beispielsweise die Ausgestaltung des Verbindungsmittels 4 auf der Fixierscheibe 1 durch zwei rampenförmige Vorsprünge 4a. Diese Vorsprünge 4a dienen zum einen zum Herstellen eines Formschlusses mit entsprechenden Ausnehmungen am Befestigungselementkopf 10, die Schrägen der Vorsprünge, die in dem hier gezeigten Ausführungsbeispiel nach Außen, also sich von der zentralen Öffnung 6 der Fixierscheibe 1 weg erstrecken dienen gleichzeitig auch als Zentrierhilfe für den Kopf 10 des Befestigungselements 2. Die Flanken der Vorsprünge 4a dienen hingegen dazu das Drehmoment aufnehmen, welches von dem Befestigungselementkopf 10 auf die Fixierscheibe 1 übertragen wird. Figur 3b zeigt sägezahnartige Einschnitte 4b oder Ausnehmungen 4b in der Fixierscheibe 1. In diese sägezahnartigen Einschnitte 4b können entsprechend komplementär ausgebildete Zähne oder Zacken des Befestigungselementkopfes 10 greifen, um Drehmoment zu übertragen. In Figur 3c ist eine glatte Fixierscheibe 1 gezeigt, die aber von ihrer Formgebung von dem Befestigungselementkopf 10 zumindest teilweise aufgenommen werden kann, um Drehmoment zu übertragen. Es ist auch möglich, dass die in diesem - nicht beanspruchten - Ausführungsbeispiel gezeigte glatte Oberfläche 4c der Fixierscheibe zumindest teilweise einen höheren Reibungskoeffizienten aufweist als der Rest der Fixierscheibe 1, so dass mit dem Befestigungselementkopf 10 ein Kraftschluss bzw. ein Reibschluss - nicht beansprucht - hergestellt werden kann. Figur 3d zeigt sägezahnartige Vorsprünge 4d auf der Fixierscheibe 1. Diese sägezahnartigen Vorsprünge 4d können mit entsprechenden Ausnehmungen im Befestigungselementkopf 10 zusammenwirken, um einen Formschluss zu bilden, so dass Drehmoment übertragen werden kann. Es ist dem Fachmann bewusst, dass auch wenn hier explizite Ausführungsbeispiele der Verbindungsmittel 4 gezeigt sind, diese auch anders ausgestaltet sein können und hier nur exemplarisch gezeigt sind. Es ist dem Fachmann dabei bewusst, dass die Ausgestaltung des Verbindungsmittels 4 derart sein muss, dass dieses genügend Drehmoment übertragen kann, um die Fixierscheibe 1 zu drehen und mit den gewählten Schneid- und / oder Reibungsmittel 5 die Schutzfolie zu entfernen.

Figur 4 zeigt perspektivische Unteransichten von verschiedenen Ausführungsbeispielen des erfindungsgemäßen Befestigungselements 2, insbesondere des Befestigungselementkopfes 10, an dessen Unterseite, also der Seite der dem ersten Endbereich des Befestigungselements 2 also der Fixierscheibe 1 zugewandt ist, zumindest ein Verbindungsmittel 11 angeordnet ist. Dieses zumindest eine Verbindungsmittel 11 ist in der Lage mit dem zumindest einen Verbindungsmittel 4 der Fixierscheibe 1 eine Verbindung herzustellen, so dass Drehmoment von dem Befestigungselement 2 auf die Fixierscheibe 1 übertragen werden kann. Das zumindest eine Verbindungsmittel 11 wird in den hier gezeigten Ausführungsbeispielen der Figuren 4a, 4b und 4d durch Ausnehmungen im Befestigungselementkopf 10 gebildet, die mit Vorsprüngen auf der Fixierscheibe 1 zusammenwirken können und eine formschlüssige Verbindung herstellen. Dabei können beispielsweise die Ausnehmungen 11a, 11d wie gezeigt in Figuren 4a und 4d mit den rampenförmigen Vorsprüngen 4a der in Figur 3a gezeigten Fixierscheibe 1 einen Formschluss bilden, so dass Drehmoment übertragen werden kann. Die in Figur 4b gezeigten sägezahnartigen Ausnehmungen 11b können beispielsweise mit den sägezahnartigen Vorsprüngen 4d der in Figur 3d gezeigten Fixierscheibe 1 einen Formschluss bilden. Es ist aber auch möglich, dass am Befestigungselementkopf 10 das Verbindungsmittel 11 durch Vorsprünge gebildet wird, wie beispielsweise in Figur 4c gezeigt, wo das Verbindungsmittel 11 durch die sägezahnartigen Vorsprünge 11c gebildet wird. Diese sägezahnartigen Vorsprünge 11c können beispielsweise in entsprechend komplementär gebildete Ausnehmung in der Fixierscheibe 1 eingreifen. Entsprechende Ausnehmungen 4b sind beispielsweise in der Fixierscheibe in Figur 3b gezeigt.

Es ist dem Fachmann bewusst, dass die Verbindungsmittel 4 und 11 der Fixierscheibe 1 und dem Befestigungselementkopf 10 beliebig ausgestaltet sein können aber komplementär zueinander passen müssen, so dass ein entsprechendes auf das Befestigungselement 2 ausgeübte Drehmoment auch auf die Fixierscheibe übertragen werden kann.

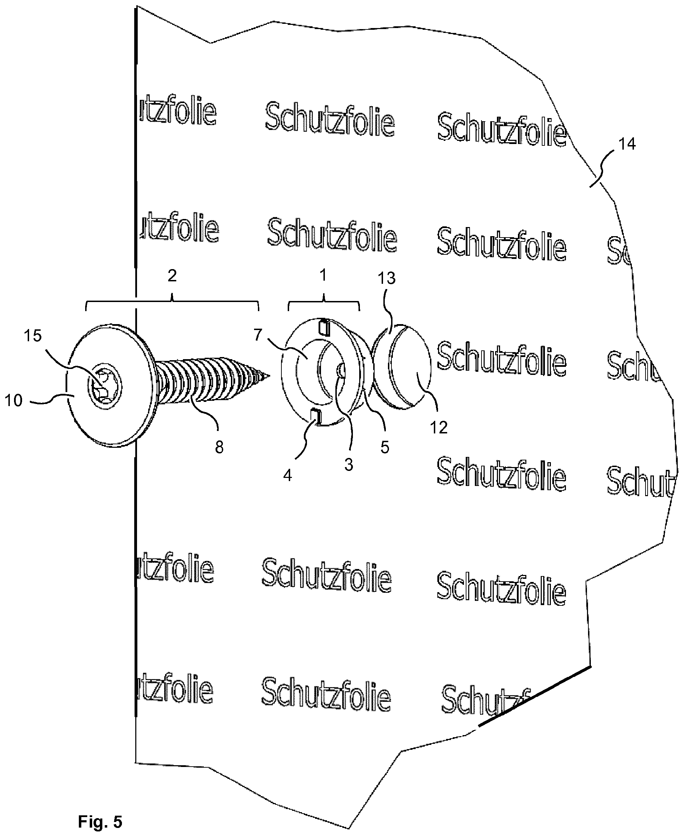

Figur. 5 zeigt eine perspektivische Ansicht einer beispielhaften Fassadenplatte 13 mit darauf angeordneter Schutzfolie 14 und ein Ausführungsbeispiel einer erfindungsgemäßen Fixierscheibe 1 mit einem erfindungsgemäßen Befestigungselement 2. In dem hier gezeigten Ausführungsbeispiel weist die Fassadenplatte 13 eine Öffnung oder Loch 12 auf, welches im Durchmesser dem Fortsatz 7 der Fixierscheibe 1 im Wesentlichen entspricht. D.h. der Fortsatz 7 der Fixierscheibe 1 kann in das Loch 12 in der Fassadenplatte 13 eingebracht werden. D.h. mit dem Fortsatz 7 ist eine Festlegung der Fixierscheibe 1 relativ zum Loch 12 möglich. Die Fixierscheibe 1 hat in dem hier gezeigten Ausführungsbeispiel einen größeren Durchmesser als das Loch 12 in der Fassadenplatte 13. D.h. die Fixierscheibe 1 liegt auf der Schutzfolie 14 auf, wenn der Fortsatz 7 in das Loch 12 der Fassadenplatte 13 eingeführt ist. Der Boden 3 des Fortsatzes 7 umfasst eine Öffnung, die ein Fixiermittel für das in die Öffnung einführbare Befestigungselement 2 bildet. Die Öffnung hält das Befestigungselement 2 dabei zumindest beim anfänglichen Setzen in der vorbestimmten Position mittig in dem Fortsatz 7 und damit mittig in dem Loch 12 der Fassadenplatte 13. D.h. das Befestigungselement 2 wird derart gehalten, dass es umfänglich einen im Wesentlichen gleichen Abstand zum Rand oder Wandung des Loches 12 hat. Das Befestigungselement 2 kann mit einem Setzwerkzeug - hier nicht gezeigt - gedreht werden. Das Drehen des Befestigungselement 2 kann beispielsweise dadurch bewerkstelligt werden, dass ein Setzwerkzeug mit einem torxförmigen Bit in die torxförmige Ausnehmung 15 in dem Kopf 10 des Befestigungselements 2 greift und so Drehmoment von dem Setzwerkzeug auf das Befestigungselement 2 übertragen wird. Beim Drehen des Befestigungselements 2 bewegt sich das Befestigungselement 2 in die Unterkonstruktion, d.h. der Abstand zwischen der Fixierscheibe 1 und dem Kopf 10 des Befestigungselements 2 wird verringert. Wenn der Kopf 10 des Befestigungselements 2 die Fixierscheibe 1 kontaktiert, dann können Ausnehmungen 11 am Kopf 10 des Befestigungselements 2 die Vorsprünge 4 der Fixierschiebe 1 auf der der Fassadenplatte 13 abgewandten Seite aufnehmen und eine formschlüssige Verbindung kann hergestellt werden. Ist eine formschlüssige Verbindung hergestellt, so drehen sich das Befestigungselement 2 sowie die Fixierscheibe 1 gleichzeitig. D.h. das an der Fixierschiebe 1 angeordnete Schneid- und/oder Reibmittel 5, welches sich auf der der Fassadenplatte 13 zugewandten Seite der Fixierscheibe 1 befindet, wird über die sich auf der Fassadenplatte 13 befindliche Schutzfolie 14 bewegt. Dies führt dazu, dass die Schutzfolie 14 zumindest unterhalb des Bereiches eingeschnitten oder entfernet wird, der von der Fixierschiebe 1 überdeckt ist. In dem hier gezeigten Ausführungsbeispiel also zumindest der Bereich, der sich um das Loch 12 erstreckt und im Wesentlichen dem Durchmesser der Fixierscheibe 1 entspricht. Dieser Bereich kann auch als Randbereich des Loches 12 bezeichnet werden. D.h. nach dem Setzen des Befestigungselements 2 ist die Schutzfolie 14 zumindest im Randbereich des Loches 12 also dem Bereich unterhalb der Fixierscheibe 1, bzw. dem von der Fixierscheibe 1 überdeckten Bereich der Fassadenplatte 13 eingeschnitten oder entfernt, so dass die Schutzfolie 14 anschließend entfernt werden kann, ohne dass Reste um den Bereich des Loches 12 nachträglich umständlich entfernt werden müssen.

## Patentansprüche

1. Eine Fixierscheibe (1) zur anfänglichen Fixierung eines Befestigungselements (2) in einer Öffnung eines zu befestigenden Bauteils, insbesondere einer Fassadenplatte, beim Setzen des Befestigungselements (2) und zum Einschneiden und / oder Entfernen eines definierten Bereichs einer Schutzfolie auf dem zu befestigenden Bauteil beim Setzen des Befestigungselements (2), die Fixierscheibe (1) aufweisend:
ein Fixiermittel zum anfänglichen Halten des Befestigungselements (2) in einer vorbestimmten Position relativ zu der Öffnung beim Setzen des Befestigungselements (2), wobei die Fixierscheibe (1) angepasst ist zumindest teilweise in der Öffnung angeordnet zu werden und wobei das Fixiermittel durch eine zentrale Öffnung (6) in der Fixierscheibe (1) und zumindest einem Haltemittel (3) gebildet wird und wobei die Fixierscheibe (1) weiter aufweist:
einen hülsenartigen Fortsatz (7), der sich um die zentrale Öffnung (6) der Fixierscheibe (1) erstreckt und angeordnet ist an der dem zu befestigenden Bauteil zugewandten Seite der Fixierscheibe (1), wobei der hülsenartige Fortsatz (7) angepasst ist in die Öffnung eingebracht zu werden;
zumindest ein Verbindungsmittel (4), auf einer dem zu befestigenden Bauteil abgewandten Seite der Fixierscheibe (1), zum zumindest zeitweisen Herstellen einer Verbindung zwischen der Fixierscheibe (1) und dem Befestigungselement (2), wobei das Verbindungsmittel (4) ausgestaltet ist eine lösbare formschlüssige Verbindung mit dem Befestigungselement (2) herzustellen zur Übertragung einer Drehbewegung des Befestigungselements (2) auf die Fixierscheibe (1); und
zumindest ein Schneid- und / oder Reibmittel (5) an der dem zu befestigenden Bauteil zugewandten Seite der Fixierscheibe (1), welches bei Drehung der Fixierscheibe (1) die Schutzfolie einschneidet und / oder abreibt.

2. Die Fixierscheibe (1) nach Anspruch 1, wobei die Fixierscheibe (1) einen Durchmesser aufweist der größer ist als der Durchmesser der Öffnung.

3. Die Fixierscheibe (1) nach Anspruch 1, wobei das Verbindungsmittel (4) gebildet wird durch zumindest einen Vorsprung und / oder zumindest eine Ausnehmung an der dem zu befestigenden Bauteil abgewandten Seite der Fixierscheibe (1) zur Herstellung der formschlüssigen Verbindung mit dem Befestigungselement (2).

4. Die Fixierscheibe (1) nach einem der Ansprüche 1 bis 3, wobei die Fixierscheibe (1) aus Kunststoff hergestellt ist und monolithisch aufgebaut ist.

5. Ein System aufweisend:
eine Fixierscheibe (1) nach einem der Ansprüche 1 bis 4;
ein Befestigungselement (2) zur Befestigung von Bauteilen, insbesondere Fassadenplatten, das Befestigungselement (2) aufweisend:
einen ersten Endbereich (8) zur Verankerung des Befestigungselements (2) in einem Untergrund oder einer Unterkonstruktion; und
einen zweiten Endbereich (9) aufweisend einen Befestigungselementkopf (10), wobei der Befestigungselementkopf (10) einen größeren Durchmesser aufweist als der Rest des Befestigungselements (2) und an der dem ersten Endbereich (8) zugewandten Seite zumindest ein Verbindungsmittel (11) zum Herstellen einer Verbindung zwischen dem Befestigungselementkopf (10) und der Fixierscheibe (1) aufweist, wobei das Verbindungsmittel (11) ausgestaltet ist eine lösbare formschlüssige Verbindung zwischen dem Befestigungselementkopf (10) und der Fixierscheibe (1) herzustellen zur Übertragung einer Drehbewegung des Befestigungselement (2) auf die Fixierscheibe (1).

6. Das System nach Anspruch 5, wobei das Verbindungsmittel (11) gebildet wird durch zumindest eine Ausnehmung und / oder zumindest einen Vorsprung am Befestigungselementkopf (10).

7. Ein Verfahren zum Einschneiden und / oder Entfernen eines definierten Bereichs einer Schutzfolie auf einem zu befestigenden Bauteil, insbesondere einer Fassadenplatte, beim Setzen eines Befestigungselements (2) in eine Öffnung in dem zu befestigenden Bauteil, wobei das Verfahren die folgenden Schritte aufweist:
Anordnen einer Fixierscheibe (1) zumindest teilweise in der Öffnung, wobei die Fixierscheibe (1) weiter aufweist:
einen hülsenartigen Fortsatz (7), der sich um eine zentrale Öffnung (6) der Fixierscheibe (1) erstreckt und angeordnet ist an der dem zu befestigenden Bauteil zugewandten Seite der Fixierscheibe (1), wobei der hülsenartige Fortsatz (7) angepasst ist in die Öffnung eingebracht zu werden;
Anordnen des Befestigungselements (2) in die zentrale Öffnung (6) der Fixierscheibe (1);
Setzen des Befestigungselements (2) durch Drehen des Befestigungselements (2), wobei während dem Setzen des Befestigungselements (2) zumindest zeitweise eine formschlüssige Verbindung zwischen dem Befestigungselement (2) und der Fixierscheibe (1) hergestellt wird, so dass die Drehung des Befestigungselements (2) auf die Fixierscheibe (1) übertragen wird und die Fixierscheibe (1) sich dreht; und
Einschneiden und / oder Entfernen der Schutzfolie auf dem zu befestigenden Bauteil durch zumindest ein Schneid- und / oder Reibmittel an der dem zu befestigenden Bauteil zugewandten Seite der sich drehenden Fixierscheibe (1).

8. Das Verfahren nach Anspruch 7, wobei das Verfahren weiter aufweist:
Entfernen der restlichen Schutzfolie um den definierten Bereich herum.

## Claims

1. A fixing disc (1) for initially fixing a fastening element (2) in an opening of a component to be fastened, in particular a facade panel, during mounting of the fastening element (2) and for cutting and/or removing a defined region of a protective film on the component to be fastened during mounting of the fastening element (2), the fixing disc (1) comprising:
fixing means for initially holding the fastening element (2) in a predetermined position relative to the opening during mounting of the fastening element (2),
wherein the fixing disc (1) is adapted to be arranged at least partially in the opening and wherein the fixing means is formed by a central opening (6) in the fixing disc (1) and at least one holding means (3) and wherein the fixing disc (1) further comprises:
a sleeve-like extension (7) which extends around the central opening (6) of the fixing disc (1) and which is arranged on the side of the fixing disc (1) facing the component to be fastened, the sleeve-like extension (7) being adapted to be inserted into the opening;
at least one connecting means (4), on a side of the fixing disc (1) facing away from the component to be fastened, for at least temporarily establishing a connection between the fixing disc (1) and the fastening element (2), wherein
the connecting means (4) is adapted to establish a releasable form-fit connection with the fastening element (2) for transmitting a rotary movement of the fastening element (2) to the fixing disc (1); and
at least one cutting and/or friction means (5) on the side of the fixing disc (1) facing the component to be fastened, which cuts into and/or rubs off the protective film when the fixing disc (1) is rotated.

2. The fixing disc (1) according to claim 1, wherein the fixing disc (1) has a diameter which is larger than the diameter of the opening.

3. The fixing disc (1) according to claim 1, wherein the connecting means (4) is formed by at least one projection and/or at least one recess on the side of the fixing disc (1) facing away from the component to be fastened for producing the form-fit connection with the fastening element (2).

4. The fixing disc (1) according to one of claims 1 to 3, wherein the fixing disc (1) is made of plastic and has a monolithic structure.

5. A system comprising
a fixing disc (1) according to any one of claims 1 to 4;
a fastening element (2) for fastening components, in particular façade panels, the fastening element (2) comprising:
a first end region (8) for anchoring the fixing element (2) in a substrate or a substructure; and
a second end region (9) having a fastening element head (10), the fastening element head (10) having a larger diameter than the rest of the fastening element (2) and, on the side facing the first end region (8), having at least one connecting means (11) for producing a connection between the fastening element head (10) and the fixing disc (1), wherein the connecting means (11) is adapted to establish a releasable form-fit connection between the fastening element head (10) and the fixing disc (1) for transmitting a rotary movement of the fastening element (2) to the fixing disc (1).

6. The system according to claim 5, wherein the connecting means (11) is formed by at least one recess and/or at least one projection on the fastening element head (10).

7. A method for cutting and/or removing a defined region of a protective film on a component to be fastened, in particular a façade panel, when placing a fastening element (2) in an opening in the component to be fastened, the method comprising the following steps:
arranging a fixing disc (1) at least partially in the opening, wherein the fixing disc (1) further comprises:
a sleeve-like extension (7) which extends around a central opening (6) of the fixing disc (1) and which is arranged on the side of the fixing disc (1) facing the component to be fastened, wherein the sleeve-like extension (7) is adapted to be inserted into the opening;
arranging the fastening element (2) in the central opening (6) of the fixing disc (1);
mounting the fastening element (2) by rotating the fastening element (2),
wherein during the mounting of the fastening element (2) a form-fit connection is established at least temporarily between the fastening element (2) and the fixing disc (1), so that the rotation of the fastening element (2) is transmitted to the fixing disc (1) and the fixing disc (1) rotates; and
cutting and/or removing the protective film on the component to be fastened by at least one cutting and/or friction means on the side of the rotating fixing disc (1) facing the component to be fastened.

8. The method according to claim 7, wherein the method further comprises:
removing the remaining protective film around the defined area.

## Revendications

1. Rondelle de fixation (1) pour la fixation initiale d'un élément d'attache (2) dans une ouverture d'une pièce à attacher, en particulier d'un panneau de façade, lors de la pose de l'élément d'attache (2) et pour entailler et/ou enlever une zone définie d'un film protecteur sur la pièce à attacher lors de la pose de l'élément d'attache (2), la rondelle de fixation (1) comprenant :
un moyen de fixation pour la retenue initiale de l'élément d'attache (2) dans une position prédéfi-nie par rapport à l'ouverture lors de la pose de l'élément d'attache (2), dans laquelle la rondelle de fixation (1) est adaptée pour être disposée au moins en partie dans l'ouverture et dans laquelle le moyen de fixation est formé par une ouverture centrale (6) dans la rondelle de fixation (1) et au moins un moyen de retenue (3) et dans laquelle la rondelle de fixation (1) comprend en outre :
un prolongement du type manchon (7), qui s'étend autour de l'ouverture centrale (6) de la rondelle de fixation (1) et est disposé sur la face de la rondelle de fixation (1) tournée vers la pièce à attacher, dans laquelle le prolongement du type manchon (7) est adapté pour être introduit dans l'ouverture ;
au moins un moyen de liaison (4), sur une face de la rondelle de fixation (1) opposée à la pièce à attacher, pour établir au moins temporairement une liaison entre la rondelle de fixation (1) et l'élément d'attache (2), dans laquelle le moyen de liaison (4) est conçu pour établir une liaison libérable à complémentarité de formes avec l'élément d'attache (2) pour la transmission d'un mouvement de rotation de l'élément d'attache (2) sur la rondelle de fixation (1) ; et
au moins un moyen de coupe et/ou de friction (5) sur la face de la rondelle de fixation (1) tournée vers la pièce à attacher, lequel incise et/ou ôte par frottement le film protecteur lors de la rotation de la rondelle de fixation (1).

2. Rondelle de fixation (1) selon la revendication 1, dans laquelle la rondelle de fixation (1) présente un diamètre qui est plus grand que le diamètre de l'ouverture.

3. Rondelle de fixation (1) selon la revendication 1, dans laquelle le moyen de liaison (4) est formé par au moins une partie saillante et/ou au moins un évidement sur la face de la rondelle de fixation (1) opposée à la pièce à attacher pour l'établissement de la liaison par complémentarité de formes à l'élément d'attache (2).

4. Rondelle de fixation (1) selon l'une des revendications 1 à 3, dans laquelle la rondelle de fixation (1) est fabriquée à partir de matière plastique et réalisée monobloc.

5. Système comprenant :
une rondelle de fixation (1) selon l'une des revendications 1 à 4 ;
un élément d'attache (2) pour l'attache de pièces, en particulier de panneaux de façade, l'élément d'attache (2) comprenant :
une première zone d'extrémité (8) pour l'ancrage de l'élément d'attache (2) dans un sol ou une sous-structure ; et
une deuxième zone d'extrémité (9) comprenant une tête d'élément d'attache (10), dans lequel la tête d'élément d'attache (10) présente un plus grand diamètre que le reste de l'élément d'attache (2) et comprend sur la face tournée vers la première zone d'extrémité (8) au moins un moyen de liaison (11) pour établir une liaison entre la tête d'élément d'attache (10) et la rondelle de fixation (1), dans laquelle le moyen de liaison (11) est conçu pour établir une liaison libérable à complémentarité de formes entre la tête d'élément d'attache (10) et la rondelle de fixation (1) pour la transmission d'un mouvement de rotation de l'élément d'attache (2) sur la rondelle de fixation (1).

6. Système selon la revendication 5, dans lequel le moyen de liaison (11) est formé par au moins un évidement et/ou au moins une partie saillante sur la tête d'élément d'attache (10).

7. Procédé pour inciser et/ou retirer une zone définie d'un film protecteur sur une pièce à attacher, en particulier un panneau de façade, lors de la pose d'un élément d'attache (2) dans une ouverture dans la pièce à attacher, dans lequel le procédé comprend les étapes suivantes :
la disposition d'une rondelle de fixation (1) au moins en partie dans l'ouverture, dans lequel la rondelle de fixation (1) comprend en outre :
un prolongement du type manchon (7), qui s'étend autour d'une ouverture centrale (6) de la rondelle de fixation (1) et est disposé sur la face de la rondelle de fixation (1) tournée vers la pièce à attacher, dans lequel le prolongement du type manchon (7) est adapté pour être introduit dans l'ouverture ;
la disposition de l'élément d'attache (2) dans l'ouverture centrale (6) de la rondelle de fixation (1) ;
la pose de l'élément d'attache (2) par rotation de l'élément d'attache (2), dans lequel pendant la pose de l'élément d'attache (2) une liaison par complémentarité de formes est établie au moins temporairement entre l'élément d'attache (2) et la rondelle de fixation (1), de sorte que la rotation de l'élément d'attache (2) est transmise sur la rondelle de fixation (1) et la rondelle de fixation (1) est amenée en rotation ; et
l'incision et/ou le retrait du film protecteur sur la pièce à attacher par au moins un moyen d'incision et/ou de frottement sur la face de la rondelle de fixation (1) amenée en rotation tournée vers la pièce à attacher.

8. Procédé selon la revendication 7, dans lequel le procédé comprend en outre :
le retrait du reste du film protecteur autour de la zone définie.
